# EUROPÄISCHE PATENTSCHRIFT

(11) **EP 2 013 148 B1**
(45) Veröffentlichungstag und Bekanntmachung des Hinweises auf die Patenterteilung: **14.12.2011**
(21) Anmeldenummer: 07724458.0
(22) Anmeldetag: 23.04.2007
(51) Int. Cl.: C02F 11/12

(54) **VORRICHTUNG UND VERFAHREN ZUM TROCKNEN VON KLÄRSCHLAMM**
DEVICE AND METHOD FOR DRYING SEWAGE SLUDGE
DISPOSITIF ET PROCÉDÉ POUR LE SÉCHAGE DE BOUES DE CURAGE

(30) Priorität: 04.05.2006 DE 102006021131
(43) Veröffentlichungstag der Anmeldung: 14.01.2009
(73) Patentinhaber: Passavant-Geiger GmbH, 65326 Aarbergen (DE)
(72) Erfinder: ZIZMANN, Richard, 72401 Haigerloch-Owingen (DE)
(74) Vertreter: KEIL & SCHAAFHAUSEN Patentanwälte
(86) Internationale Anmeldenummer: PCT/EP2007/003528
(87) Internationale Veröffentlichungsnummer: WO 2007/128400

(56) Entgegenhaltungen:
- DE-B- 1 101 936
- DE-U1-202004 016 397
- FR-A- 2 875 721
- US-A- 5 660 124

## Beschreibung

Die Erfindung betrifft eine Vorrichtung zum Trocknen von Klärschlamm oder dergleichen Biomasse mit einer Trockenfläche, auf die der Klärschlamm oder dergleichen Biomasse zum Trocknen ausbringbar ist, und mit einer Förder- und Wendeeinrichtung, die zum Fördern und Wenden von Klärschlamm oder dergleichen Biomasse auf der Trockenfläche im Wesentlichen parallel zu dieser in einer Förderrichtung bewegbar ist. Weiter betrifft die Erfindung ein Verfahren zum Trocknen von Klärschlamm oder dergleichen Biomasse.

Aus der DE 43 15 321 A1 ist eine Vorrichtung zur Trocknung von Schlämmen und verschmutzten Flüssigkeiten mit Solarstrahlung bekannt, bei welcher Schlamm oder dergleichen auf ein Grabensilo aufgebracht und mittels einer als Paddelwalze ausgebildeten Transport- und Wendevorrichtung transportiert werden kann. Die Paddelwalze ist dabei nur unstetig betätigbar, da sie nach dem Überfahren des Grabensilos zunächst in ihre Ausgangsposition zurückbewegt werden muss. Auch aus der DE 197 04 201 A1 ist eine Vorrichtung zum Entwässern und Trocknen von Schlämmen bekannt, bei welcher der Schlamm mit einem Unstetigförderer über eine Gitterschicht bewegt wird.

In der Praxis führt dies dazu, dass bei Trockenflächen von beispielsweise etwa 50 m Länge die Paddelwalze etwa 3 Stunden benötigt, um über die Trockenfläche und in ihre Ausgangsposition zurücktransportiert zu werden. Durch diese vergleichsweise langen Zyklen kommt es häufig zu einem unerwünschten Anbacken von Schlamm auf der Trockenfläche.

In der DE 103 11 554 B4 wurde daher eine Vorrichtung der eingangs genannten Art zum Trocknen von Klärschlamm vorgeschlagen, bei welcher ein Kratzförderer, der mehrere Kratzer oder Räumbalken aufweisen kann, kontinuierlich betrieben wird. In Abhängigkeit der Einsatzbedingungen kann es in einigen Fällen wünschenswert sein, den getrockneten Klärschlamm auf eine definierte Granulatgröße zu zerkleinern. Weiter tritt bei bekannten Vorrichtungen teilweise das Problem einer Verschmutzung der Förder- und/oder Wendeeinrichtung auf, welche sich nur zeitaufwendig beseitigen lässt.

Aus der DE 1 101 936 ist ein Verfahren zum Trocknen von Zellstoff bekannt, bei welchem der Zellstoff auf eine mit Zähnen versehene Gehäusefläche aufgebracht wird, der ein Rotor gegenüberliegt, auf dem in konzentrischen Kreisen weitere Zähne angebracht sind. Im Betrieb der Vorrichtung werden durch die Relativbewegung zwischen den Zähnen Turbulenzen erzeugt und die Teile des Zellstoffs werden durch die Zähne In kleinere Teile gebrochen. Die Trocknung erfolgt über die Zufuhr von warmer Luft in das Gehäuse.

Aufgabe der vorliegenden Erfindung ist es demgegenüber, eine Vorrichtung der eingangs genannten Art zum Trocknen von Klärschlamm oder dergleichen Biomasse und ein entsprechendes Verfahren zu schaffen, wobei die Vorrichtung leicht reinigbar ist und gleichzeitig ein Aufbrechen des getrockneten Klärschlamms auf eine definierte Granulatgröße ermöglicht.

Diese Aufgabe wird erfindungsgemäß im Wesentlichen dadurch gelöst, dass die Förder- und Wendeeinrichtung zumindest bereichsweise nach unten zu der Trockenfläche weisende Zinken aufweist, und dass auf der Trockenfläche von dieser im Wesentlichen nach oben ragende Kammstifte ausgebildet sind. Bei einer Bewegung der Förder- und Wendeeinrichtung relativ zu der Trockenfläche passieren die Zinken die Kammstifte, so dass Verschmutzungen an den Zinken an den Kammstiften abgestreift werden. So werden insbesondere Zöpfe, welche sich häufig an den Zinken bilden, durch das Passieren der Zwischenräume zwischen den Kammstiften von den Zinken abgezogen. Gleichzeitig muss der zu trocknende Klärschlamm die Zwischenräume zwischen den auf der Trockenfläche ausgebildeten Kammstiften passieren, wenn der Klärschlamm über die Trockenfläche gefördert wird. Hierdurch wird der getrocknete Klärschlamm aufgebrochen, so dass durch den Abstand der Kammstifte die Granulatgröße des getrockneten Klärschlamms definiert wird. Die mit den Zinken zusammenwirkenden Kammstifte dienen somit einerseits zum Reinigen der Zinken und andererseits zum Zerkleinern des getrockneten Klärschlamms.

Um ein optimales Reinigungsergebnis und einen störungsfreien Betrieb der erfindungsgemäßen Vorrichtung zu erzielen, sind vorzugsweise mehrere Zinken senkrecht zur Förderrichtung zumindest um die Breite eines Kammstiftes voneinander beabstandet angeordnet. In gleicher Weise sind mehrere Kammstifte senkrecht zur Förderrichtung zumindest um die Breite eines Zinken voneinander beabstandet angeordnet. Die Zinken können so durch die Zwischenräume zwischen den Kammstiften geführt werden.

Nach einer vorteilhaften Ausführungsform der Erfindung sind die Kammstifte und/oder die Zinken jeweils in senkrecht oder schräg zur Förderrichtung verlaufenden Linien angeordnet. Entlang der Trockenfläche können dabei mehrere auf gekrümmten oder geraden Linien angeordnete Kammstifte verteilt angeordnet sein. Auf diese Weise kann erreicht werden, dass der zu trocknende Klärschlamm in Förderrichtung mehrere Kammstifte passieren muss.

Wenn die Kammstifte und/oder die Zinken jeweils in zueinander in Förderrichtung versetzt angeordneten Gruppen angeordnet sind, ist die von der Förder- und/ Wendeeinrichtung aufzubringende Kraft, welche während des Aufbrechens des getrockneten Klärschlamms beim Passieren der Zwischenräume zwischen den Kammstiften durch die Zinken aufzubringen ist, vorteilhafterweise möglichst gering. Die versetzte Anordnung der Kammstifte bzw. der Zinken verhindert auch ein Kippen eines beispielsweise an einer Förderkette oder einem Förderseil befestigten Balkens oder dergleichen Kratzer der Förder- und Wendeeinrichtung.

Um die Granulatgröße des getrockneten Klärschlamms individuell anpassen zu können, wird es bevorzugt, dass der Abstand der Kammstifte zueinander veränderbar ist.

Die Trockenfläche kann einen Unterbau beispielsweise aus Beton und/oder einem Dämmstoff aufweisen. Dabei wird es bevorzugt, wenn in dem Unterbau für jeden Kammstift ein Widerlager aus Beton, Stahl, Kunststoff oder dergleichen vorgesehen ist, so dass die Kammstifte sicher in dem Unterbau der Trockenfläche gehalten werden. Der Unterbau kann auch mit einer Bewehrung versehen sein.

In Weiterbildung dieses Erfindungsgedankens ist es vorgesehen, dass die Kammerstifte jeweils einen nach oben zumindest nicht wesentlich über die Trockenfläche hinausragenden Lagerstift aufweisen, welcher insbesondere in dem Unterbau in einem Widerlager fixiert ist und auf welchem lösbar ein Federelement vorgesehen ist. Das von der Trockenfläche im Betrieb nach oben ragende Federelement bildet dabei den Abschnitt des Kammstiftes, welcher den zu trocknenden Klärschlamm zerkleinert und die Zinken der Förder- und Wendeeinrichtung reinigt, wenn die Zinken die Zwischenräume zwischen den Kammstiften passieren.

Wenn die Kammstifte jeweils wenigstens ein auswechselbares Federelement aus Federstahl oder dergleichen aufweisen, können die Kammstifte Fremdstoffen, wie Steinen oder dergleichen, federnd ausweichen. Im Gegensatz zu bekannten Anlagen verursachen Steine oder dergleichen im Klärschlamm enthaltene Fremdstoffe daher kein Blockieren oder Beschädigen der Vorrichtung. Falls dennoch das Federelement eines Kammstiftes beschädigt werden sollte, hat es sich als besonders vorteilhaft erwiesen, dass die Federelemente einzeln auswechselbar sind, und dass längere Stillstandszeiten der Vorrichtung auftreten. So können die bspw. rohrartigen Federelemente auf die Kammstifte aufgesteckt und von diesen abgezogen werden.

Die Trockenfläche ist zumindest bereichsweise durch eine in dem Unterbau der Trockenfläche vorgesehene Heizeinrichtung beheizbar. Diese Heizeinrichtung kann durch Heizschlangen oder dergleichen gebildet werden, wobei im Bereich der Kammstifte und/oder in Dehnfugen ein spezieller Schutz der Heizung vorgesehen sein kann.

Wenn weiter die Trockenfläche zumindest bereichsweise in einem nach Art eines Gewächshauses aufgebauten Gebäude angeordnet ist, kann der Klärschlamm zumindest teilweise solar getrocknet werden. Das Gebäude hat dabei die Aufgabe, den zu trocknenden Klärschlamm vor Regen oder dergleichen Witterungseinflüssen zu schützen, die Sonnenstrahlung zur Erwärmung des Gebäudeinnenraums bzw. des auf die Trockenfläche aufgebrachten Klärschlamms zu nutzen und Feuchtigkeit durch Be- und Entlüftung abzuführen.

Nach einer bevorzugten Ausführungsform der Erfindung weist die Förder- und Wendeeinrichtung wenigstens einen entlang einer zumindest im Wesentlichen parallel zu der Trockenfläche in Förderrichtung verlaufenden Förderstrecke und einer Rücklaufstrecke kontinuierlich umlaufenden Kratzförderer oder Räumbalken auf. Alternativ oder zusätzlich hierzu kann die Förder- und/ Wendeeinrichtung mehrere entlang einer zumindest im Wesentlichen parallel zu der Trockenfläche in Förderrichtung verlaufende Förderstrecke und einer Rücklaufstrecke kontinuierlich umlaufenden Eggenzinken zum Zerkleinern, Wenden und Fördern von Klärschlamm aufweisen.

Das erfindungsgemäße Verfahren zum Trocknen von Klärschlamm oder dergleichen Biomasse ist dadurch gekennzeichnet, dass zunächst Klärschlamm auf eine Solar- und/oder mittels einer Wärmequelle beheizbare Trockenfläche aufgebracht und auf dieser mit einer insbesondere kontinuierlich umlaufenden Förder- und Wendeeinrichtung gefördert und/ gewendet wird, die zumindest bereichsweise nach unten zu der Trockenfläche weisende Zinken aufweist. Dabei werden zum Reinigen der Zinken und/oder zum Zerkleinern von Klärschlamm die Zinken der Förder- und/ Wendeeinrichtung durch Zwischenräume zwischen von der Trockenfläche im Wesentlichen nach oben ragende Kammstifte geführt, die insbesondere auswechselbare Federelemente aufweisen.

Weiterbildungen, Vorteile und Anwendungsmöglichkeiten der Erfindung ergeben sich auch aus der nachfolgenden Beschreibung eines Ausführungsbeispiels und der Zeichnung.

Es zeigen schematisch:
- Fig. 1: einen Schnitt durch eine erfindungsgemäße Vorrichtung in Förderrichtung und
- Fig. 2: eine Draufsicht auf die erfindungsgemäße Vorrichtung nach Fig. 1.

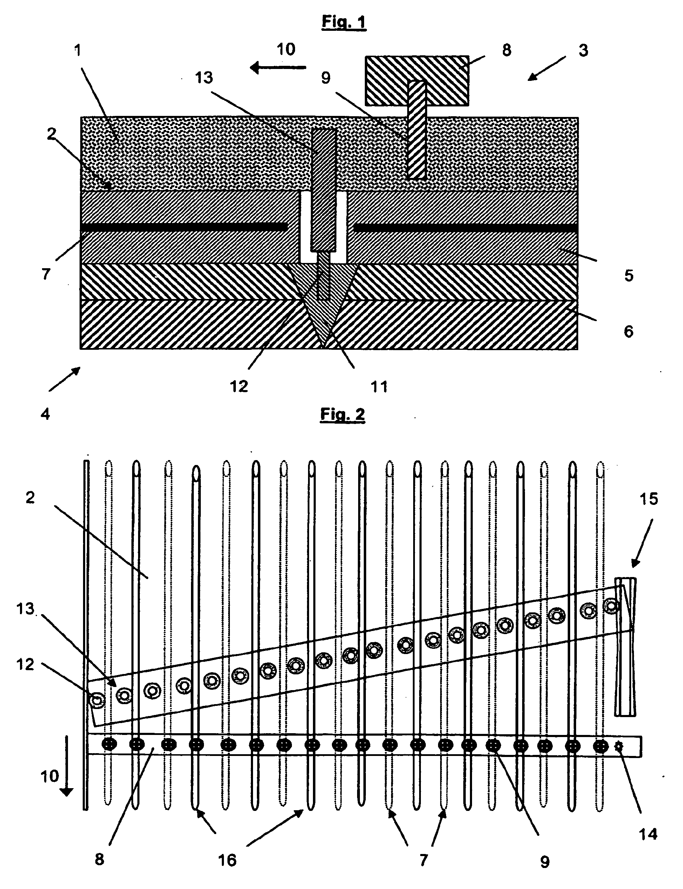

Die in Fig. 1 dargestellte Vorrichtung weist zum Trocknen von Klärschlamm 1 eine Trockenfläche 2 auf, über welche der Klärschlamm mittels einer Förder- und Wendeeinrichtung 3 transportierbar ist. Die Trockenfläche 2, welche beispielsweise eine Länge von bis zu etwa 50 m aufweisen kann, ist durch einen in der dargestellten Ausführungsform mehrschichtigen Unterbau 4 aus Beton 5 und eine Dämmschicht 6 gebildet. In den Unterbau 4 ist eine durch eine schematisch angedeutete Heizwendel 7 dargestellte Heizeinrichtung vorgesehen, um die Trockenfläche 2 in der Art einer Fußbodenheizung erwärmen zu können.

Die Förder- und Wendeeinrichtung 3 ist durch einen Räumbalken 8 oder Kratzer gebildet, an welchem Eggenzinken 9 oder dergleichen nach unten in Richtung zu der Trockenfläche 2 hinweisen. Der Kratzer bzw. Räumbalken 8 kann dabei über in der Figur nicht dargestellte Ketten, Seile oder dergleichen derart angetrieben geführt sein, dass dieser auf einer kontinuierlich umlaufenden Bahn in einer durch Pfeil 10 angedeuteten Förderrichtung über die Trockenfläche 2 bewegt und auf einer Rücklaufstrecke zu seiner Ausgangsposition zurückbewegt wird. Die Förder- und Wendeeinrichtung 3 ist dabei derart ausgebildet, dass die Eggenzinken 9 in den zu trocknenden Klärschlamm 1 eintauchen und mit geringem Abstand über die Trockenfläche 2 geführt werden. Auf diese Weise wird der Klärschlamm 1 in Richtung des Pfeils 10 gefördert und gleichzeitig gewendet und zerkleinert.

In dem Unterbau 4 der Trockenfläche 2 sind über Widerlager 11 Lagerstifte 12 fixiert. Die Lagerstifte 12 sind dabei derart vorgesehen, dass sie sich nicht oder allenfalls minimal über die Trockenfläche 2 nach oben erstrecken. Die Lagerstifte 12 können aus einem im Wesentlichen unnachgiebigen steifen Material, beispielsweise aus Stahl bestehen. Zur Ausbildung eines Kammstiftes lassen sich auf die Lagerstifte 12 bspw. rohrartige Federelemente 13 aufstecken, die aus einem im Vergleich zu den Lagerstiften 12 flexibleren Material bestehen. Die Federelemente 13 ragen dabei über die Trockenfläche 2 nach oben in den Klärschlamm 1 hinein und können ggf. nach oben aus diesem hervorstehen.

Wie aus der Darstellung der Fig. 2 ersichtlich ist, sind die Eggenzinken 9 auf dem Räumbalken 3 und die Federelemente 13 der Kammstifte auf der Trockenfläche 2 derart angeordnet, dass die Eggenzinken 9 die Zwischenräume zwischen den Kammstiften in Förderrichtung 10 passieren können. Der Abstand zwischen den Kammstiften ist dabei derart gewählt, dass Verschmutzungen von Eggenzinken 9 abgestreift werden, so dass diese im Betrieb gereinigt werden. Gleichzeitig wird der ggf. angetrocknete Klärschlamm 1 zerkleinert, wenn dieser durch die sich in Förderrichtung 10 bewegenden Eggenzinken 9 durch die Zwischenräume zwischen den Kammstiften gefördert wird.

Um eine kontinuierlichere Belastung der erfindungsgemäßen Vorrichtung zu erreichen und ein Kippen des Räumbalkens 8 oder dergleichen zu vermeiden, erstreckt sich der Räumbalken 8 im Wesentlichen senkrecht zu der Förderrichtung 10, während die Kammstifte entlang einer schräg zu der Förderrichtung 10 und schräg zu dem Räumbalken 8 verlaufenden Linie angeordnet sind. Es passiert somit im Wesentlichen immer nur eine Eggenzinke 9 einen Zwischenraum zwischen zwei Kammstiften. Weiter kann zur Führung des Räumbalkens 8 oder dergleichen auf diesem ein Zentrierstift 14 vorgesehen sein, welcher in einer Zentriereinrichtung 15 geführt wird.

Zusätzlich zu der Heizung 7, welche im Bereich der Kammstifte oder im Bereich von Dehnfugen mit einem in den Figuren nicht dargestellten Schutz versehen sein kann, können in dem Unterbau 4 der Trockenfläche 2 Bewehrungen 16 oder dergleichen eingebracht sein.

### Bezugszeichenliste:

- 1: Klärschlamm
- 2: Trockenfläche
- 3: Förder- und/ Wendeeinrichtung
- 4: Unterbau
- 5: Beton
- 6: Dämmstoff
- 7: Heizung
- 8: Räumbalken/Kratzer
- 9: (Eggen-)Zinken
- 10: Förderrichtung
- 11: Widerlager
- 12: Lagerstift
- 13: Federelement
- 14: Zentrierstift
- 15: Zentriereinrichtung
- 16: Bewehrung

## Patentansprüche

1. Vorrichtung zum Trocknen von Klärschlamm (1) oder dergleichen Biomasse mit einer Trockenfläche (2), auf die der Klärschlamm (1) zum Trocknen ausbringbar ist, und mit einer Förder- und Wendeeinrichtung (3), die zum Fördern und Wenden von Klärschlamm (1) auf der Trockenfläche (2) im Wesentlichen parallel zu dieser in einer Förderrichtung (10) bewegbar ist, dadurch gekenntzeichnet, dass die Förder- und Wendeeinrichtung (3) zumindest bereichsweise nach unten zu der Trockenfläche (2) weisende Zinken (9) aufweist, und dass auf der Trockenfläche (2) von dieser im Wesentlichen nach oben ragende Kammstifte (12, 13) ausgebildet sind.

2. Vorrichtung nach Anspruch 1, **dadurch gekennzeichnet, dass** mehrere Zinken (9) senkrecht zur Förderrichtung (10) zumindest um die Breite eines Kammstiftes (12, 13) voneinander beabstandet angeordnet sind.

3. Vorrichtung nach Anspruch 1 oder 2, **dadurch gekennzeichnet, dass** mehrere Kammstifte (12, 13) senkrecht zur Förderrichtung (10) zumindest um die Breite eines Zinken (9) voneinander beabstandet angeordnet sind.

4. Vorrichtung nach einem der vorhergehenden Ansprüche, **dadurch gekennzeichnet, dass** die Kammstifte (12, 13) und/oder die Zinken (9) jeweils in senkrecht oder schräg zur Förderrichtung (10) verlaufenden Linien angeordnet sind.

5. Vorrichtung nach einem der vorhergehenden Ansprüche, **dadurch gekennzeichnet, dass** die Kammstifte (12, 13) und/oder die Zinken (9) jeweils in zueinander in Förderrichtung (10) versetzt angeordneten Gruppen angeordnet sind.

6. Vorrichtung nach einem der vorhergehenden Ansprüche, **dadurch gekennzeichnet, dass** der Abstand der Kammstifte (12, 13) zueinander veränderbar ist

7. Vorrichtung nach einem der vorhergehenden Ansprüche, **dadurch gekennzeichnet, dass** die Trockenfläche (2) einen Unterbau (4) bspw. aus Beton (5) und/oder einem Dämmstoff (6) aufweiset, in welchem für Jeden Kammstift (12, 13) ein Widerlager (11) aus Beton, Stahl oder Kunststoff vorgesehen ist.

8. Vorrichtung nach einem der vorhergehenden Ansprüche, **dadurch gekennzeichnet, dass** die Kammstifte jeweils einen nach oben zumindest nicht wesentlich über die Trockenfläche (2) hinausragenden Lagerstift (12) aufweisen, auf welchem lösbar ein Federelement (13) vorgesehen ist.

9. Vorrichtung nach einem der vorhergehenden Ansprüche, **dadurch gekennzeichnet, dass** die Kammstifte jeweils wenigstens ein auswechselbares Federelement (13) aus Federstahl aufweisen.

10. Vorrichtung nach einem der vorhergehenden Ansprüche, **dadurch gekennzeichnet, dass** die Trockenfläche (2) zumindest bereichsweise durch eine in einem Unterbau (4) der Trockenfläche (2) vorgesehene Heizeinrichtung (7), insbesondere Heizschlangen, beheizbar ist.

11. Vorrichtung nach einem der vorhergehenden Ansprüche, **dadurch gekennzeichnet, dass** die Trockenfläche (2) zumindest bereichsweise in einem nach Art eines Gewächshauses aufgebauten Gebäude angeordnet ist.

12. Vorrichtung nach einem der vorhergehenden Ansprüche, **dadurch gekennzeichnet, dass** die Förder- und Wendeeinrichtung (3) wenigstens einen entlang einer zumindest im Wesentlichen parallel zu der Trockenfläche (2) in Förderrichtung (10) verlaufenden Förderstrecke und einer Rücklaufstrecke kontinuierlich umlaufenden Kratzförderer oder Räumbalken (8) aufweist.

13. Vorrichtung nach einem der vorhergehenden Ansprüche, **dadurch gekennzeichnet, dass** die Förder- und Wendeeinrichtung (3) mehrere entlang einer zumindest im Wesentlichen parallel zu der Trockenfläche (2) In Förderrichtung (10) verlaufenden Förderstrecke und einer Rücklaufstrecke kontinuierlich umlaufenden Eggenzinken (9) zum Zerkleinern, Wenden und Fördern von Klärschlamm (1) oder dergleichen aufweist.

14. Verfahren zum Trocknen von Klärschlamm (1) oder dergleichen Biomasse mit folgenden Schritten:
- Aufbringen von Klärschlamm (1) auf eine solar und/oder mittels einer Wärmequelle (7) beheizbare Trockenfläche (2),
- Fördern und Wenden von Klärschlamm (1) auf der Trockenfläche (2) mit einer insbesondere kontinuierlich umlaufenden Förder- und Wendeeinrichtung (3), die zumindest bereichsweise nach unten zu der Trockenfläche (2) weisende Zinken (9) aufweist,
**dadurch gekennzeichnet, dass** zum Reinigen der Zinken (9) und/oder zum Zerkleinem von Klärschlamm (1) die Zinken (9) der Förder- und Wendeeinrichtung (3) durch Zwischenräume zwischen von der Trockenfläche (2) im Wesentlichen nach oben ragende Kammstifte (12, 13), die insbesondere auswechselbare Federelemente (13) aufweisen, geführt werden.

## Claims

1. A device for drying sewage sludge (1), comprising a drying surface (2) onto which the sewage sludge (1) can be placed for drying and a conveyor and turnover device (3) which, for conveying and turning sewage sludge (1), can be moved on the drying surface (2) substantially parallel to the latter in a conveying direction (10), **characterized in that** the conveyor and turnover device (3), at least in some areas, has prongs (9) which point downward toward the drying surface (2) and that combing pins (12, 13) are formed on the drying surface (2) which project substantially upward therefrom.

2. The device according to claim 1, **characterized in that** a plurality of prongs (9) is arranged perpendicular to the conveying direction (10) and the prongs are spaced apart from each other at least by the width of a combing pin (12, 13).

3. The device according to claim 1 or claim 2, **characterized in that** a plurality of combing pins (12, 13) is arranged perpendicular to the conveying direction (10) and the pins are spaced apart from each other at least by the width of a prong (9).

4. The device according to any one of the preceding claims, **characterized in that** the combing pins (12, 13) and/or the prongs (9) are arranged in each case in lines extending perpendicular or angular to the conveying direction (10).

5. The device according to any one of the preceding claims, **characterized in that** the combing pins (12, 13) and/or the prongs (9) are arranged in each case in groups which are arranged offset to each other in the conveying direction (10).

6. The device according to any one of the preceding claims, **characterized in that** the distance of the combing pins (12, 13) to each other can be changed.

7. The device according to any one of the preceding claims, **characterized in that** the drying surface (2) has a substructure (4) made, for example, from concrete (5) and/or an insulating material (6) in which for each combing pin (12, 13), an abutment (11) made from concrete, steel or plastic is provided.

8. The device according to any one of the preceding claims, **characterized in that** the combing pins each have one bearing pin (12) which, at least not significantly, projects upward beyond the drying surface (2) and on which a spring element (13) is provided in a detachable manner.

9. The device according to any one of the preceding claims, **characterized in that** the combing pins each have at least one exchangeable spring element (13) made of spring steel.

10. The device according to any one of the preceding claims, **characterized in that** the drying surface (2) can be heated at least in some areas by a heating device (7), in particular heating coils, provided in a substructure (4) of the drying surface (2).

11. The device according to any one of the preceding claims, **characterized in that** the drying surface (2) is arranged at least in some areas in a building structured in the manner of a greenhouse.

12. The device according to any one of the preceding claims, **characterized in that** the conveyor and turnover device (3) comprises at least one scraper conveyor or scraper blade (8) which continuously circulates along a conveyor section running in the conveying direction (10) substantially parallel to the drying surface (2), and along a return section.

13. The device according to any one of the preceding claims, **characterized in that** the conveyor and turnover device (3) has a plurality of harrow prongs (9) for comminuting, turning and conveying of sewage sludge (1) or the like, which harrow prongs continuously circulate along a conveyor section running in the conveying direction (10) substantially parallel to the drying surface (2), and along a return section.

14. A method for drying sewage sludge (1), comprising the following steps:
- placing sewage sludge (1) onto a drying surface (2) which can be solarly heated and/or heated by means of a heating source (7),
- conveying and turning sewage sludge (1) on the drying surface (2) by means of a conveyor and turnover device (3) which, in particular, continuously circulates and which, at least in some areas, has prongs (9) pointing downward toward the drying surface (2),
**characterized in that** for cleaning the prongs (9) and/or for comminuting sewage sludge (1), the prongs (9) of the conveyor and turnover device (3) are guided through gaps between combing pins (12, 13) which project substantially upward from the drying surface (2) and which, in particular, have exchangeable spring elements (13).

## Revendications

1. Dispositif pour le séchage de boue d'épuration (1), avec une surface de séchage (2) sur laquelle peut être répandue la boue d'épuration (1) pour le séchage, et avec un dispositif de transport et de retournement (3) apte à être mise en mouvement pour le transport et le retournement de la boue d'épuration (1) sur la surface de séchage (2), quasiment parallèlement à celle-ci dans une direction de transport (10), **caractérisé en ce que** le dispositif de transport et de retournement (3) comporte des dents (9) orientées au moins par endroits vers le bas en direction de la surface de séchage (2), et **en ce que** des tiges de peigne (12, 13) faisant essentiellement saillie vers le haut sont formées sur la surface de séchage (2).

2. Dispositif selon la revendication 1, **caractérisé en ce que** plusieurs dents (9) sont disposées perpendiculairement à la direction de transport (10) et espacées entre elles d'au moins la largeur d'une tige de peigne (12, 13).

3. Dispositif selon la revendication 1 ou 2, **caractérisé en ce que** plusieurs tiges de peigne (12, 13) sont disposées perpendiculairement à la direction de transport (10) et espacées entre elles d'au moins la largeur d'une dent (9).

4. Dispositif selon l'une des revendications précédentes, **caractérisé en ce que** les tiges de peigne (12, 13) et/ou les dents (9) sont disposées respectivement en lignes perpendiculaires ou obliques par rapport à la direction de transport (10).

5. Dispositif selon l'une des revendications précédentes, **caractérisé en ce que** les tiges de peigne (12, 13) et/ou les dents (9) sont disposées respectivement en groupes agencés de façon décalée les uns par rapport aux autres dans la direction de transport (10).

6. Dispositif selon l'une des revendications précédentes, **caractérisé en ce que** l'espacement entre les tiges de peigne (12, 13) peut être modifié.

7. Dispositif selon l'une des revendications précédentes, **caractérisé en ce que** la surface de séchage (2) comporte une embase (4), par exemple en béton (5) et/ou en une matière isolante (6), dans laquelle est prévu un contre-appui (11) en béton, en acier ou en plastique, pour chacune des tiges de peigne (12, 13).

8. Dispositif selon l'une des revendications précédentes, **caractérisé en ce que** les tiges de peigne comportent chacune une tige de support (12) faisant saillie vers le haut, du moins légèrement par-dessus la surface de séchage (2), sur laquelle est placé de façon détachable un élément à ressort (13).

9. Dispositif selon l'une des revendications précédentes, **caractérisé en ce que** les tiges de peigne comportent chacune au moins un élément à ressort (13) interchangeable en acier à ressort.

10. Dispositif selon l'une des revendications précédentes, **caractérisé en ce que** la surface de séchage (2) peut être chauffée au moins par endroits par un dispositif de chauffage (7), en particulier des serpentins de chauffage prévus ans une embase (4) de la surface de séchage (2).

11. Dispositif selon l'une des revendications précédentes, **caractérisé en ce que** la surface de séchage (2) est agencée au moins par endroits dans un bâtiment construit à la manière d'une serre.

12. Dispositif selon l'une des revendications précédentes, **caractérisé en ce que** le dispositif de transport et de retournement (3) comporte au moins un convoyeur à raclettes ou une poutre de déblayage (8) circulant en continu le long d'un trajet de transport évoluant au moins essentiellement parallèlement à la surface de séchage (2) dans la direction de transport (10), et d'un trajet de retour.

13. Dispositif selon l'une des revendications précédentes, **caractérisé en ce que** le dispositif de transport et de retournement (3) comporte plusieurs dents de herse (9) circulant en continu le long d'un trajet de transport évoluant au moins essentiellement parallèlement à la surface de séchage (2) dans la direction de transport (10), et d'un trajet de retour, destinées à broyer, retourner et transporter la boue d'épuration (1) ou autre.

14. Procédé pour le séchage de boue d'épuration (1), avec les étapes suivantes :
- application de boue d'épuration (1) sur une surface de séchage (2) apte à être chauffée au soleil et/ou au moyen d'une source de chaleur (7),
- transport et retournement de la boue d'épuration (1) sur la surface de séchage (2), avec un dispositif de transport et de retournement (3) circulant notamment en continu et comportant des dents (9) orientées au moins par endroits vers le bas en direction de la surface de séchage (2), **caractérisé en ce que** pour le nettoyage des dents (9) et/ou le broyage de la boue d'épuration (1), les dents (9) du dispositif de transport et de retournement (3) sont guidées à travers des espaces intermédiaires entre des tiges de peigne (12, 13) faisant saillie essentiellement vers le haut sur la surface de séchage (2) et comportant en particulier des éléments à ressort (13) interchangeables.
